# EUROPEAN PATENT SPECIFICATION

(11) **EP 0 501 050 B1**
(45) Date of publication and mention of the grant of the patent: **23.11.1994**
(21) Application number: 91301520.2
(22) Date of filing: 26.02.1991
(51) Int. Cl.: B29C 45/17

(54) **Unit type mold for injection molding**
Form vom Baukastentyp zum Spritzgiessen
Moule du type à unités pour mouler par injection

(43) Date of publication of application: 02.09.1992
(73) Proprietor: SANKYO ENGINEERING CO. LTD., Ootsuki-shi Yamanashi (JP)
(72) Inventor: Nakamura, Susumu, Tomihamacho, Ootsuki-shi, Yamanashi (JP); Yokoi, Koichi, Tomihamacho, Ootsuki-shi, Yamanashi (JP)
(74) Representative: Votier, Sidney David

(56) References cited:
- FR-A- 1 135 381
- GB-A- 1 064 268
- US-A- 2 755 758
- US-A- 4 265 297
- PATENT ABSTRACTS OF JAPAN vol. 14, no. 58 (M-930)(4001) February 2, 1990 & JP-A-1 283 119 (FUTABA CORP.)
- PATENT ABSTRACTS OF JAPAN vol. 8, no. 22 (M-272)(1459) January 31, 1984 & JP-A-58 183 232 (YUUJI TAGAWA)

## Description

The present invention relates to a unit type mold for injection molding used to mold synthetic resins or the like in which a pair of mold bodies formed from a core and cavity are formed to be a cassette type inside mold that may be detachably mounted on an outer frame mounted on an injection molding machine.

In a conventional unit type mold such as disclosed in JP-A-1 283 119, when an inside mold is mounted on an outer frame, first, the inside mold fitted with a core and cavity is fitted and fallen into a fitting portion of the outer frame in a fitting state, after which they are separated and temporarily fixed by pressing members, and locating and fixing of the inside mold within the outer frame are carried out while performing fitting of the fitting state of the core and cavity.

The conventional unit type mold involves cumbersome steps such as falling of the inside mold, separation of the core and cavity, and locating and fixing through the fitting of the fitting state, and the inside mold cannot be easily changed. Moreover, since the fixing is made by threadedly mounting the pressing member formed with a slot on the outer frame, the stability is poor and skilled work is required for locating.

An aim of the present invention is to provide a unit type mold for injection molding in which locating of an inside mold is automatically carried out and the inside mold is changed and mounted in a simple manner.

A further aim of the present invention is to provide a unit type mold for injection molding in which the inside mold can be changed within an extremely short period of time without requiring skills and a single injection molding machine can be used to perform several kinds of moldings in a short period of time.

According to the present invention there is provided a unit type mold for injection molding comprising a pair of inside molds mounted within a pair of outer frames, characterised by the pair of inside molds being provided at each outer end edge with a flange and being fitted at a cavity surface and a core surface, a fitting portion for detachably fitting said inside molds while maintaining the fitting state, and the pair of outer frames being provided with a pressing mechanism internally of an outer frame fitting portion, said pressing mechanism comprising a pressing member projected internally of the fitting portion while being adjusted to a thickness of the flange and having a pressing end turned in a direction of pressing the flange, and a clamp bolt by which a base end of the pressing member is pulled in the turning direction by operation of the clamp bolt from outside the outer frame.

Accordingly, in the unit type mold for injection molding according to the present invention, the flange of the inside mold is fitted into a gap between a pressing member of a pressing mechanism projected on the inner wall of a fitting portion of the outer frame and an inner wall surface of the fitting portion, and therefore, the inside mold can be slidably moved along a predetermined position and received in position without consideration of steps from falling to locating.

Moreover, the flange provided on the inside mold is pressed and fixed by drawing the clamper using the clamp bolt operated by rotation from outside the outer frame, and therefore, the clamping operation can be completed in the state where both the inside mold and the outer frame are exactly fitted.

The above and other aims and novel features of this invention will become more apparent by reading the ensuing detailed description in connection with the accompanying drawings. However, the drawings are merely provided for explanation and the scope of the invention is not limited thereby.

In the drawings:
FIG. 1(a) and 1(b) are respectively partly cutaway side views of an entire mold unit in the state where the inside mold is secured to the outer frame and the mold is opened according to one embodiment of the present invention;
FIG. 2 is a partly cutaway side view in the case where the inside mold is fitted in the outer frame in the state where the inside mold is not fitted; and
FIG. 3 is a partly cutway side view of an outer frame on the cavity side according to one embodiment of the present invention.

### DETAILED DESCRIPTION OF THE PREFERRED EMBODIMENTS

Preferred embodiments of the present invention will now be described in detail with reference to the accompanying drawings.

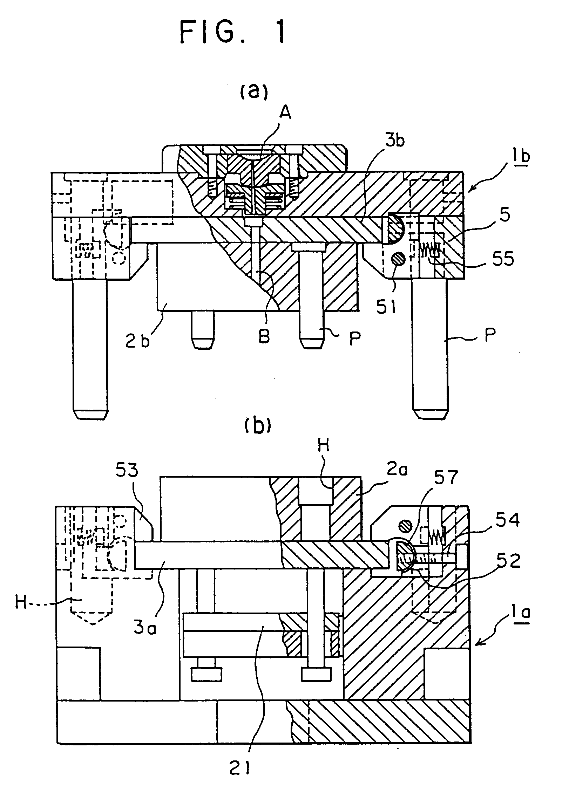

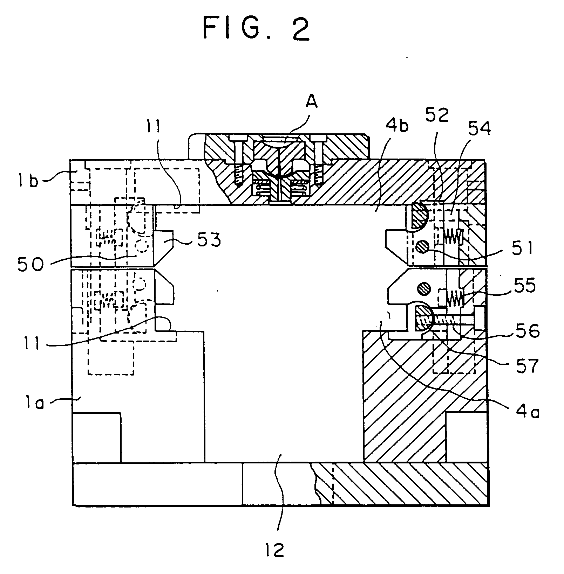

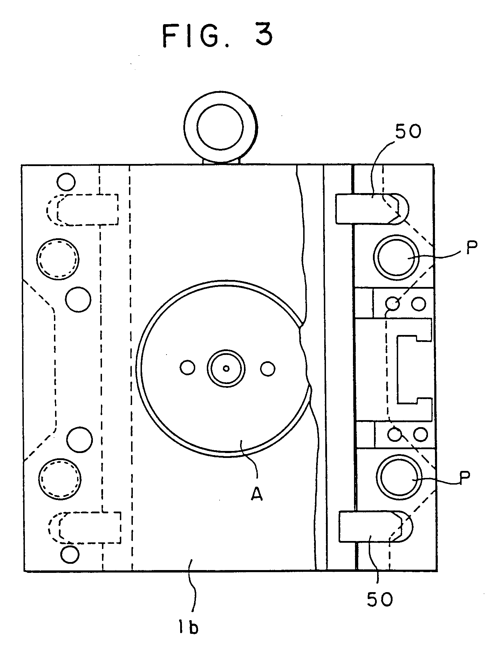

Referring to FIGS. 1(a) and 1(b) to FIG. 3, an outer frame 1 mounted on an injection molding machine comprises a core side 1a and a cavity side 1b, and provided with inside mold fitting portions 4a and 4b for fitting a core inside mold 2a and a cavity inside mold 2b, respectively. On the cavity-side outer frame 1b is provided a nozzle touch A for receiving a material from the injection machine, and the material is introduced under pressure therefrom into a mold (not shown) formed by fitting of the 2a and 2b via a sprue B whereby molding is carried out.

The core-side frame 1a includes a housing portion 12 for housing an ejecting mechanism 21 provided on the inside mold 2a, and both molds are guided by fitting between a guide pole P and a guide hole H. The core inside mold 2a and the cavity inside mold 2b are provided at outer end edges thereof with flanges 3a and 3b, respectively. First, the inside molds 2a and 2b fitted from the side are fallen and fitted into a fitting portion 4 formed by fitting the outer frames 1a and 1b.

The inside mold fitting portions 4a and 4b of the outer frames 1a and 1b are provided with a pressing mechanism 5 having a pressing end 53 projected at a position spaced by a thickness d of the inside mold franges 3a and 3b from an inner wall 11 of the outer frame in contact with the inside mold flange, the pressing end 53 and the inner wall 11 constituting a guide groove of the inside mold flange, and the inside mold flange is fixed after falling.

The pressing mechanism 5 comprises a pressing member 50 which rotates about a pivot 51, a clamp bolt 54 for pulling a base end 52 thereof outwardly, and a spring 55 for urging the pressing end 53 in a separating direction, which is normally biased in a separating direction.

The clamp bolt 54 is threadedly engaged with a drawing nut 57 through a bare hole 56 extending through the base end 52 of the pressing member 50 from the outer walls of the outer frames 1a and 1b, whereby when the clamp bolt 54 is turned from outside, the drawing nut 57 moves forward or backward to draw the base end 52 and press and fix or disengage the inside mold flange.

The unit type mold for injection molding according to the present invention is configured as described above. Therefore, pressing and fixing of the inside mold 2a with respect to the outer frame 1a are carried out merely by fitting the outer frames 1a and 1b to fit the inside molds 2a and 2b into the fitting portion 3 in the fitting state and turning the clamp bolt 54 from the threaded hole open to the outer wall of the outer frame. The position of the inside mold 2b is automatically determined by maintaining position through the fitting, and therefore, the inside mold can be changed in an extremely short period of time without requiring skill along with the guide of the inside mold flange formed by the inner wall of the fitting portion and the projecting end of the pressing member.

Accordingly, a single injection molding machine can be used to mold several kinds of moldings in a short period of time.

## Claims

1. A unit type mold for injection molding comprising a pair of inside molds (2a, 2b) mounted within a pair of outer frames (1a, 1b), characterised by the pair of inside molds (2a, 2b) being provided at each outer end edge with a flange (3a, 3b) and being fitted at a cavity surface and a core surface, a fitting portion (4a, 4b) for detachably fitting said inside molds (2a, 2b) while maintaining the fitting state, and the pair of outer frames (1a, 1b) being provided with a pressing mechanism (5) internally of an outer frame fitting portion, said pressing mechanism (5) comprising a pressing member (50) projected internally of the fitting portion (4a, 4b) while being adjusted to a thickness of the flange (3a, 3b) and having a pressing end (53) turned in a direction of pressing the flange (3a, 3b), and a clamp bolt (54) by which a base end (52) of the pressing member (50) is pulled in the turning direction by operation of the clamp bolt (54) from outside the outer frame (1a, 1b).

2. A unit type mold for injection molding according to claim 1, wherein fitting, mounting and removal of the inside molds (2a, 2b) into said fitting portion (4a, 4b) are carried out from the side of said outer frames (1a, 1b).

3. A unit type mold for injection molding according to claim 1, wherein said pressing mechanism (5) comprises an elastic member (55) for always urging said pressing end (53) in a direction opposite to the flange (3a, 3b) pressing direction, and said clamp bolt (54) keeps forming and maintaining a guide groove for guiding said flange (3a, 3b) of said inside mold (2a, 2b) during a period in which said pressing member (50) is not pulled.

## Patentansprüche

1. Form vom Typ Einheitsform zum Spritzgießen, ein Paar von inneren Formen (2a, 2b) umfassend, die innerhalb eines Paares äußerer Rahmen (1a, 1b) angeordnet sind, dadurch gekennzeichnet, daß das Paar innerer Formen (2a, 2b) an jedem äußeren Stirnrand mit einem Flansch (3a, 3b) und an einer Hohlraumfläche und einer Kernfläche angebracht ist, einem Paßteil (4a, 4b) um herausnehmbar diese inneren Formen (2a, 2b) einzupassen, während der Paßzustand aufrechterhalten wird und das Paar äußerer Rahmen (1a, 1b) mit einem Preßmechanismus innerhalb eines äußeren Rahmenpaßteils versehen ist, wobei der Preßmechanismus (5) ein Preßelement (50) umfaßt, das innen vom Paßteil (4a, 4b) aus vorgeschoben ist, während die Einstellung auf eine Dicke des Flansches (3a, 3b) erfolgt und über ein Preßende (53) verfügt, das in einer Richtung, in der der Flansch (3a, 3b) gepreßt wird, gedreht ist, sowie ein Klemmbolzen (54), durch den ein Basisende (52) des Preßelementes (50) in Drehrichtung durch Betätigung des Klemmbolzens (54) von außerhalb des äußeren Rahmens (1a, 1b) gezogen wird.

2. Form vom Einheitstyp zum Spritzgießen nach Anspruch 1, wobei Einpassen, Montieren und Entfernen der inneren Formen (2a, 2b) in den Paßteil (4a, 4b) von der Seite der äußeren Rahmen (1a, 1b) aus durchgeführt werden.

3. Form vom Typ Einheitsform zum Spritzgießen nach Anspruch 1, wobei dieser Preßmechanismus (5) ein elastisches Element (55) umfaßt, um dieses Preßende (53) immer in eine Richtung entgegengesetzt zu der der Flansch (3a, 3b)-Preßrichtung zu beaufschlagen wird und dieser Klemmbolzen (54) das Formen und Halten einer Führungsnut aufrechterhält, um diesen Flansch (3a, 3b) dieser inneren Form (2a, 2b) während eines Zeitraums zu führen, währenddessen dieses Preßelement (50) nicht gezogen wird.

## Revendications

1. Moule du type à unités-pour le moulage par injection comprenant une paire de moules internes (2a, 2b) montés à l'intérieur d'une paire de châssis extérieurs (1a, 1b), caractérisé en ce que la paire de moules internes (2a, 2b) est munie à chaque bord d'extrémité extérieure d'une bride (3a, 3b) et est pourvue d'une surface de cavité et d'une surface de noyau, d'une partie de montage (4a, 4b) pour monter de manière amovible lesdits moules internes (2a, 2b) tout en maintenant l'état d'ajustement, et la paire de châssis extérieurs (1a, 1b) étant munie d'un mécanisme de pression (5) à l'intérieur d'une partie de montage du châssis extérieur, ledit mécanisme de pression (5) comprenant un élément de pression (50) qui dépasse de manière interne de la partie de montage (4a, 4b) tout en étant ajusté à une épaisseur de la bride (3a, 3b) et ayant une extrémité de pression (53) tournée dans une direction de pression de la bride (3a, 3b) et un boulon de serrage (54) par lequel une extrémité de base (52) de l'élément de pression (50) est tirée dans la direction de la rotation par l'actionnement du boulon de serrage (54) à partir de l'extérieur du châssis extérieur (1a, 1b).

2. Moule du type à unités pour le moulage par injection selon la revendication 1, dans lequel la mise en place, le montage et l'enlèvement des moules internes (2a, 2b) dans ladite partie de montage (4a, 4b) sont effectués à partir du côté desdits châssis extérieurs (1a, 1b).

3. Moule du type à unités pour le moulage par injection selon la revendication 1, dans lequel ledit mécanisme de pression (5) comprend un élément élastique (55) pour pousser toujours ladite extrémité de pression (53) dans une direction opposée à la direction de pression de la bride (3a, 3b), et ledit boulon de serrage (54) conserve la formation et le maintien d'une rainure de guidage pour guider ladite bride (3a, 3b) dudit moule interne (2a, 2b) pendant une durée pendant laquelle ledit élément de pression (50) n'est pas tiré.
